(19) **Europäisches Patentamt / European Patent Office / Office européen des brevets**

(11) **EP 3 014 920 B1**

(12) **FASCICULE DE BREVET EUROPEEN**

(45) Date de publication et mention de la délivrance du brevet:
**03.01.2018 Bulletin 2018/01**

(21) Numéro de dépôt: **14745193.4**

(22) Date de dépôt: **30.06.2014**

(51) Int Cl.:
**H04W 28/02** *(2009.01)*  **H04L 1/00** *(2006.01)*

(86) Numéro de dépôt international:
**PCT/FR2014/051668**

(87) Numéro de publication internationale:
**WO 2014/207412 (31.12.2014 Gazette 2014/53)**

(54) **PROCEDE D'ADAPTATION DE LIEN POUR SELECTIONNER UN MODE DE TRANSMISSION DE TRAMES ET POINT D'ACCES WIFI CORRESPONDANT**

VERFAHREN ZUR ANPASSUNG EINER VERBINDUNG ZUR AUSWAHL EINES FRAME-ÜBERTRAGUNGSMODUS UND ENTSPRECHENDER WIFI-ZUGANGSPUNKT

METHOD FOR ADAPTING A LINK FOR SELECTING A FRAME TRANSMISSION MODE AND CORRESPONDING WI-FI ACCESS POINT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2013 FR 1356340**

(43) Date de publication de la demande:
**04.05.2016 Bulletin 2016/18**

(73) Titulaire: **Orange**
**75015 Paris (FR)**

(72) Inventeurs:
• **BOUZIGUES, Marc-Antoine**
**F-35700 Rennes (FR)**
• **SIAUD, Isabelle**
**F-35000 Rennes (FR)**
• **ULMER-MOLL, Anne-Marie**
**F-35700 Rennes (FR)**

(56) Documents cités:
**WO-A1-2008/088188    WO-A1-2009/078524
WO-A1-2011/083238**

• **FROST V S ET AL: "Traffic modeling for telecommunications networks", IEEE COMMUNICATIONS MAGAZINE, IEEE SERVICE CENTER, PISCATAWAY, US, vol. 32, no. 3, 1 mars 1994 (1994-03-01), pages 70-81, XP011417098, ISSN: 0163-6804, DOI: 10.1109/35.267444**

## Description

### Domaine de l'invention

La présente invention se rapporte au domaine des télécommunications. Au sein de ce domaine, l'invention se rapporte aux communications dites numériques entre entité de communication. Une entité de communication peut aussi bien être un terminal mobile ou fixe qu'un point d'accès d'un réseau d'accès. L'invention se rapporte plus particulièrement aux techniques de sélection d'un lien ou mode de transmission parfois désignées par techniques d'adaptation de lien mises en oeuvre par un point d'accès d'un réseau d'accès dans un contexte de partage d'un même canal entre différentes entités de communication.

Les communications numériques comprennent en particulier les communications sans fil ; elles comprennent aussi par exemple les communications filaires. Le support de transmission des communications est couramment appelé canal de transmission ou de propagation, à l'origine en référence à un canal aérien et par extension en référence à tout canal. A titre d'exemple, les systèmes filaires peuvent avoir une interface de transmission de type CPL (Courant Porteur en Ligne ou PLT (Power Line Transmission)) avec un canal de transmission filaire qui emprunte le réseau électrique ou une interface de transmission optique avec un canal de transmission qui peut aussi bien être filaire (fibre optique) qu'aérien en sortie d'une diode par exemple. Les systèmes sans fil ont une interface dite de transmission RF lorsqu'il s'agit d'un système de télécommunication avec une transmission aérienne d'un signal appartenant à une bande radio (par exemple, de type GSM, UMTS, 802.11x, 802.16e).

Une interface de transmission comprend la couche physique PHY qui englobe un ou plusieurs modes de transmission et les protocoles de transmission propres (MAC : "Medium Access Control" en anglais) pour mettre en oeuvre ces modes de transmission.

Dans le contexte de l'invention, un mode de transmission désigne une technique de transmission (OFDM, technique MIMO (mapping spatial, Spatial Division Multiplex, etc), étalement de spectre, etc.) associée à un schéma de codage correcteur d'erreur et de modulation numérique, schéma désigné par MCS (Modulation and Coding Scheme, typiquement QPSK ½, 16-QAM ¾, etc) ainsi qu'à une taille de bande de transmission Bw et à une fréquence porteuse de transmission (optique, RF, etc, éventuellement de valeur nulle) permettant de générer le signal dans une bande du spectre dédiée à sa transmission (bande de base, bande radio, bande infrarouge, bande optique) pour délivrer un débit PHY D.

### Art antérieur

Les systèmes de télécommunication sont généralement structurés selon une architecture qui répond à une organisation en couches selon le modèle de communication OSI, normalisé par l'ISO (International Organization for Standardization selon la terminologie anglosaxonne).

Le modèle de communication OSI définit la gestion de service de transmission de données au moyen de sept couches protocolaires superposées : la couche physique (couche 1), la couche liaison de données (couche 2), la couche réseau (couche 3), la couche transport (couche 4), la couche session (couche 5), la couche présentation (couche 6) et la couche application (couche 7).

Les trois premières couches 1, 2 et 3, dites couches basses, sont relatives à la mise en oeuvre de la connexion et au transport des données. Les quatre couches suivantes, dites couches hautes, sont responsables du traitement des données. Cette organisation permet donc au système de télécommunication d'implémenter le service associé aux données traitées.

Les protocoles de liaison de données répondent aux demandes de services provenant de la couche réseau et réalisent leur fonction par l'envoi de demandes de services à la couche physique.

Les échanges de signalisation entre deux entités de communication séparées par un canal de transmission sont pilotés au niveau de la couche liaison de données au moyen d'une structure de trames, dites trames MAC. Les trames MAC sont encapsulées dans une structure de trames, dite trames physiques par la couche physique PHY avant leur transmission par le canal de transmission. Parmi les trames on distingue les trames de données. Le reste des trames est désigné ultérieurement par les termes trames de contrôle.

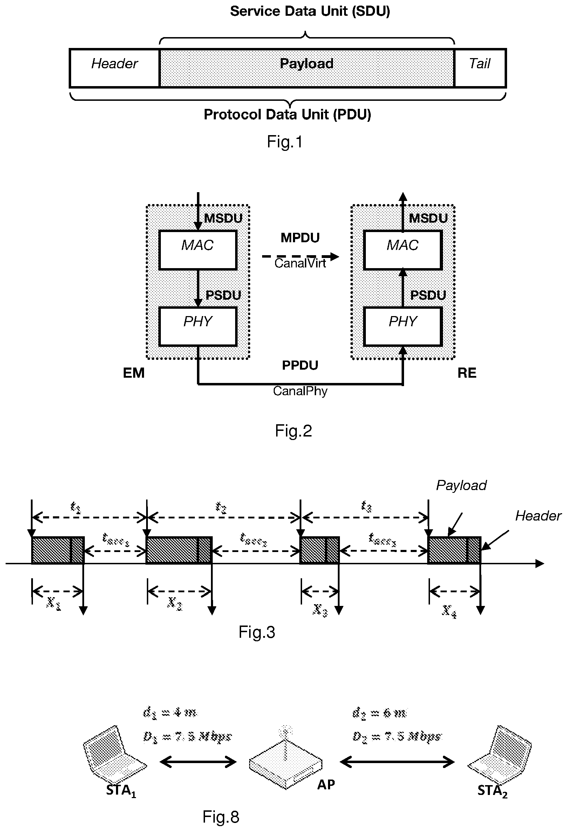

Les trames de données considérées ont un format générique illustré par la figure 1. Ce format se compose d'un entête (Header), de données (Payload) et d'un champ de queue (Tail). Selon ce format chaque couche encapsule les données SDU (Service Data Unit) provenant de la couche supérieure dans un ou plusieurs PDU (Protocol Data Unit).

Les trames de contrôle comporte au moins un entête.

L'échange de trames entre les couches physiques PHY et MAC d'un émetteur EM et d'un récepteur RE, est illustré par le schéma de la figure 2. La correspondance entre les trames MAC des deux couches MAC se fait via un canal virtuel CanalVirt. Le canal physique CanalPhy entre les couches PHY correspond au canal de transmission.

La trame de données transmise sur le canal de communication par la couche PHY est alors appelée PPDU (Physical Layer Convergence Protocol PDU) et la charge de donnée (Payload) transportée par un PPDU est appelée PSDU. L'entête d'un PPDU contient des champs permettant de réaliser la synchronisation entre l'émetteur et le récepteur, de réaliser l'estimation du canal de transmission et contient des champs avec des informations nécessaires à la réception du PSDU. Les données (Payload) provenant de la couche MAC sont encapsulées dans un ou plusieurs PPDU.

Le temps de transmission $t_{tra}$ d'une trame de données PPDU dépend du mode de transmission utilisé et doit nécessairement être inférieur au temps d'accès $t_{acc}$ associé au mode d'accès. Le temps d'accès est le temps pendant lequel le canal de transmission est disponible.

Pour respecter une contrainte de débit physique moyen $D_{moy}$ associée généralement à une qualité de service QoS garantie pour un service donné, les données (Payload) doivent être transmises en une durée t inférieure au rapport Payload/$D_{moy}$.

Les méthodes d'adaptation de lien ont pour objectif d'assurer un débit moyen $D_{moy}$ à une distance émetteur-récepteur d en tenant compte du support de transmission, de manière à garantir une qualité de service QoS.

A cette fin, la méthode d'adaptation de lien sélectionne en temps réel une interface de transmission et un mode de transmission répondant aux contraintes du service (d, débit, QoS).

La sélection porte donc sur le mode de transmission le plus adapté pour garantir un débit et une QoS à une distance d.

De [1], il est connu un algorithme d'adaptation de lien dit MiSer. Dans une étape d'initialisation, le procédé détermine hors fonctionnement des tables de qualité. A cette fin, l'algorithme MISER considère les six paramètres suivants :

$R$ : Le débit instantané du mode de transmission sélectionné pour une interface donnée de type WiFi,
$P_T$ : La puissance de transmission de l'émetteur
$l$ : la taille du champ de données à transmettre correspondant à une unité PSDU
$s$ : les pertes de propagation entre l'émetteur et le récepteur
$SRC$ : le nombre de tentatives de transmission du RTS (Request To Sent) correspondant à une demande d'accès au canal.
$LRC$ : le nombre de tentatives de transmission du PPDU

Lors de l'initialisation, le procédé estime deux paramètres :

$L(R,P_T,l,s,SRC,LRC)$ : le nombre de bits qui seront correctement transmis
$E(R,P_T,l,s,SRC,LRC)$ : l'énergie nécessaire pour transmettre $L$.

Ces deux estimations sont calculées de manière récursive en considérant toutes les combinaisons possibles des paramètres $R$, $P_T$, $l$, $s$, $SRC$ et $LRC$. Puis, à partir des deux paramètres estimés, le procédé estime l'efficacité énergétique J :

$$J(R, P_T, l, s, SRC, LRC) = \frac{L(R,P_T,l,s,SRC,LRC)}{E(R,P_T,l,s,SRC,LRC)} \tag{1}$$

Pour chacune des combinaisons possibles ($l,s,SRC,LRC$) la combinaison ($R,P_T$) maximisant $J$ est stockée.

Lors du déroulement du procédé hors initialisation, la station qui veut transmettre estime les pertes de propagation s et récupère le nombre de tentatives de transmission du RTS ($SRC$) et du PPDU ($LRC$). En fonction du quadruplet de données ($l,s,SRC,LRC$) la station récupère dans les tables de qualités, la combinaison des paramètres ($R,P_T$) à utiliser pour maximiser l'efficacité énergétique de la transmission. Cet algorithme permet donc de maximiser l'efficacité énergétique de la transmission d'une charge de données mais il est contraignant puisqu'il impose l'utilisation des trames RTS/CTS et il nécessite une phase d'initialisation hors fonctionnement. Ces trames augmentent la consommation du système puisque l'envoi des trames RTS/CTS à un cout énergétique. La phase d'initialisation hors fonctionnement est nécessaire pour calculer l'efficacité énergétique correspondant à toutes les combinaisons possibles des paramètres ($R,P_T,l,s,SRC,LRC$).

De la même manière, le document WO2009 / 078524 décrit un procédé dans lequel l'occupation de canal est utilisée pour déterminer un débit binaire lors de l'accès à un canal radio partagé.

## Exposé de l'invention

L'invention propose une technique permettant d'améliorer l'efficacité de la sélection d'un mode de transmission adapté pour garantir un débit moyen $D_{moy}$ et une qualité de service QoS à une portée d pour une entité de communication comprenant différents modes de transmission.

Ainsi, l'invention a pour objet un procédé d'adaptation de lien utilisant un critère de sélection pour sélectionner un mode de transmission de trames PPDU à transmettre sur un canal d'un système de télécommunication comprenant un point d'accès et au moins une station comprenant différents modes de transmission auxquels sont associés des débits instantanés différents, l'accès au canal étant de type aléatoire, la sélection utilisant une métrique $\gamma$ d'occupation temporelle du canal.

L'invention a en outre pour objet un point d'accès WiFi comprenant M modes de transmission auxquels sont associés respectivement des débits instantanés différents, $M \geq 2$, destiné à un système de télécommunication comprenant plusieurs stations et le point d'accès, l'accès au canal de transmission du système de télécommunication WiFi étant de type aléatoire.

Ainsi, un point d'accès WiFi selon l'invention comprend :

- un module de détermination pour un mode de transmission donné de la valeur d'une première métrique $\gamma_{n,m}$ d'occupation temporelle du canal,
- un module de comparaison des valeurs de la métrique $\gamma_{n,m}$ pour différents modes à une valeur seuil pour présélectionner des modes de transmission,
- un module d'adaptation de lien pour effectuer la sélection selon un critère déterminé parmi les différents modes présélectionnés.

Selon l'invention, le débit $D_{moy}$ est le rapport entre la quantité d'information utile transmise pour la transmission d'un service pour un utilisateur au niveau de la couche PHY nécessitant une fenêtre temporelle T permettant de transmettre le service de cet utilisateur. Il peut couvrir plusieurs paquets de données PPDU intégrant la transmission des entêtes (Header, tail bits (HARQ)) et les périodes de non-transmission entre les PPDUs sur la fenêtre temporelle T. Sur la durée de la fenêtre, des PPDU peuvent être transmis vers d'autres utilisateurs, ce qui signifie que la taille de la fenêtre dépend du service à transmettre pour l'utilisateur et l'occupation temporelle des canaux pour d'autres utilisateurs.

La sélection porte donc sur le mode de transmission le plus adapté pour garantir un débit $D_{moy}$ et une QoS à une distance d sur une fenêtre temporelle.

Le débit instantané est le débit PHY correspondant au nombre de bits d'information transmis par seconde à l'échelle d'un PSDU pour un mode et une interface donnée et il ne tient pas compte du format de trame au niveau de la couche MAC.

L'invention se place dans le contexte d'un accès aléatoire à un canal de transmission partagé entre différentes entités de communication. Un tel type d'accès se rencontre en particulier dans les systèmes dits WiFi. Les entités de communication comportent différents modes de transmission pouvant être associés à une même technologie, c'est-à-dire à une même interface de transmission, ou à des technologies différentes, c'est-à-dire à plusieurs interfaces de transmission. En particulier, une entité compatible du standard 802.11-2012[2] comprend au moins dix modes différents définis par le choix du schéma de modulation et de codage (MCS) associé au type de « codage » MIMO (SDM ou STBC). Un débit instantané est associé à chacun des modes.

L'invention sélectionne un mode de transmission en tenant compte de l'occupation temporelle du canal. A cette fin, l'invention estime l'occupation temporelle en évaluant au moyen de la métrique $\gamma$ le rapport entre le temps de disponibilité du canal et le temps requis pour transmettre une trame PPDU. Contrairement aux techniques antérieures, la sélection du mode de transmission n'est pas uniquement basée sur une maximisation du débit instantané, de l'efficacité énergétique ou de l'efficacité spectrale mais prend en compte l'occupation temporelle du canal ce qui permet de garantir un débit moyen tout en assurant une utilisation optimale du canal. En mesurant le trafic sur le canal, l'invention tient compte de la disponibilité du canal pour sélectionner le mode et le débit associé.

L'invention permet avantageusement de remplir les « trous » qui existent entre les paquets lorsque la sélection est basée uniquement sur un critère de débit maximum. En effet, l'utilisation de la métrique revient à effectuer un étalement temporel pour remplir « les trous ».

En prenant en compte la disponibilité du canal, le procédé selon l'invention permet d'éliminer les modes qui conduisent à une congestion du canal bien que ces modes maximisent l'efficacité énergétique. Une telle situation de congestion entraîne une modification du mode sélectionné pour résorber la congestion. Ainsi, la prise en compte sur une certaine durée du seul critère d'efficacité énergétique peut conduire à un fonctionnement sous-optimal du système lorsqu'une congestion intervient entraînant une chute du débit.

Selon un mode de réalisation, le procédé élimine de la sélection les modes de transmission qui ne respectent pas une valeur minimale pour la métrique $\gamma$ d'occupation temporelle du canal.

L'invention permet avantageusement d'atteindre un compromis entre le débit, la disponibilité temporelle du canal et l'énergie dépensée contrairement aux techniques connues.

En effet, une sélection basée sur une occupation minimale du canal en minimisant la taille des paquets par le choix d'une maximisation du débit se fait généralement au détriment de l'efficacité énergétique du système.

Même si certaines techniques antérieures peuvent maximiser l'efficacité énergétique et garantir une qualité de service QoS, elles ne tiennent pas compte de l'impact de l'allongement de la durée des paquets qui peut conduire à une congestion du canal. Par suite, ces techniques peuvent avoir à gérer des retransmissions qui entrainent une baisse du débit.

L'invention a en outre pour objet un système de télécommunication à modes de transmission multiples adapté pour la mise en oeuvre d'un procédé selon l'invention.

Ainsi, un système de télécommunication selon l'invention comprend un point d'accès WiFi selon un objet précédent.

Selon un mode de réalisation particulier, la mesure de l'occupation temporelle du canal est faite sur une fenêtre d'observation déterminée et utilise une modélisation par une loi de Poisson du taux d'arrivée des trames PPDU à transmettre, la variance $\lambda$ de la loi de Poisson correspondant à la fréquence moyenne d'arrivée des trames PPDU.

Ce mode exploite le caractère aléatoire de l'accès au canal en évaluant une probabilité d'arrivée des paquets PPDU par une loi de Poisson. La durée de la fenêtre d'observation est paramétrable et déterminée typiquement lors de simulations. La variance de la loi de Poisson donne la fréquence moyenne d'arrivée des trames PPDU sur la fenêtre d'observation. La durée moyenne de disponibilité du canal $t_{acc}$ est alors déterminée par la différence entre l'inverse de la fréquence moyenne d'arrivée des trames PPDU et la durée temporelle moyenne d'une trame PPDU : $t_{acc} = \frac{1}{\lambda} - \overline{X}$.

Le taux d'arrivée des trames PPDU à transmettre peut tout aussi bien être modélisé par une loi différente de la loi de Poisson telle une loi Gaussienne ou être obtenu à l'issue de mesures.

Selon un mode de réalisation, la métrique s'exprime sous la forme suivante :

$$\gamma = 10 \cdot \log_{10}\left(\frac{t_{acc}}{t_{tra_m}}\right)$$

avec $t_{acc}$ le temps d'accès moyen au canal sur la fenêtre d'observation, $t_{tra_m}$ le temps nécessaire à la transmission d'une trame PPDU en utilisant le mode de transmission m qui s'exprime sous la forme :

$$t_{tra_m} = t_{header} + \frac{Data}{Datarate(m)}$$

avec Data la charge en octets du PSDU à transmettre dans la trame PPDU, *Datarate* le débit instantané correspondant au mode m de transmission utilisé.

La trame PPDU comporte un entête dont la durée $t_{header}$ dépend du mode de transmission m utilisé pour transmettre la trame PPDU.

Selon un mode de réalisation, les différents modes de transmission sont classés par groupe de débits instantanés équivalents et pour un groupe, le procédé comprend :

- une étape de détermination pour un mode de transmission donné de la valeur d'une première métrique $\alpha$ qui mesure une dégradation relative du signal de communication à une distance donnée d introduite par le support de transmission pour un environnement donné par rapport à un modèle de référence du support de transmission, résultat d'un effet multi trajets et/ou d'un effet d'atténuation du support de transmission,
- une étape de comparaison des valeurs de la première métrique $\alpha$ pour différents modes pour sélectionner au moins un mode de transmission par groupe.

Ce mode permet avantageusement d'effectuer une sélection des différents modes de transmission basée sur des critères qui permettent de minimiser la puissance d'émission tout en respectant une contrainte de débit.

Le classement par groupes de débits équivalents permet avantageusement de mettre en oeuvre les étapes de détermination et de comparaison au moyen d'une méthode de sélection d'une interface décrite dans la demande de brevet WO2011083238 publiée le 14.07.2011 car cette méthode est limitée à des interfaces de débit équivalent, c'est-à-dire compris dans une fourchette d'environ 3%.

La méthode WO2011083238 effectue une sélection selon un critère d'optimisation du bilan de liaison qui tient compte de la puissance rayonnée à une distance d ARP(d), de la puissance requise $S_M$ pour le mode/l'interface sélectionné à un débit D liée à une QoS visée. A cette fin la méthode met en oeuvre deux métriques $\alpha$ et $\beta$. La méthode effectue une sélection d'un mode de transmission dans un terminal multi-mode, en optimisant un bilan de liaison normalisé qui permet de comparer des systèmes opérant dans des bandes différentes (RF, optique, filaire) et présentant des gammes de variation de puissance indépendantes.

Les métriques $\alpha$ et $\beta$ évaluent la dégradation relative globale introduite par le canal multi-trajet sur le dispositif de transmission et dans le milieu de propagation.

La métrique $\beta$ mesure l'excédent de puissance entre la puissance disponible $P_a(d,fc)$ et la puissance requise $S_M$ pour assurer la communication avec une QoS donnée. Cette méthode permet d'optimiser l'efficacité énergétique. L'utilisation de la métrique $\beta$ permet de contrôler que le mode sélectionné fournit une puissance suffisante qui dépasse le seuil de sensibilité de la deuxième entité. Le cas selon lequel aucun des modes ne fournit de puissance suffisante pour dépasser le seuil, traduit le fait que la deuxième entité est hors de couverture de la première entité. Après la sélection du mode de transmission, le procédé peut ajuster la puissance rayonnée en fonction de l'excédent de puissance mesurée par la seconde métrique.

Selon une implémentation préférée, les étapes du procédé d'adaptation de lien selon l'invention sont déterminées par les instructions d'un programme incorporé dans un circuit électronique telle une puce elle-même pouvant être disposée dans un dispositif électronique tel une entité de communication. Le procédé d'adaptation de lien, selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quel dispositif capable de stocker le programme. Par exemple, le support peut comporter un moyen de stockage, tel qu'une ROM, par exemple un CD ROM, une clé USB ou une ROM de circuit microélectronique, ou encore un moyen d'enregistrement magnétique, par un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.


**Liste des figures**

D'autres caractéristiques et avantages de l'invention apparaîtront lors de la description qui suit d'exemples particuliers faite en regard de figures annexées données à titre d'exemples non limitatifs.

La figure 1 est une représentation schématique de la structure d'une trame de la couche physique de niveau un et de la trame correspondante de la couche MAC (Media Access Control) de niveau deux, en référence au modèle OSI.

La figure 2 est un schéma de principe de l'échange virtuel de trames entre les couches physiques PHY et MAC d'un émetteur EM et d'un récepteur RE, il représente un exemple d'encapsulation des données SDU dans les PDUs pour les couches PHY et MAC, ({PSDU et PPDU} pour la couche PHY, {MSDU,MPDU} pour la couche MAC).

La figure 3 est un schéma d'occupation temporelle du canal de transmission par des trames.

La figure 4 est un schéma illustrant la détermination du temps $t_{acc}$ moyen d'accès au canal par l'observation des trames transmises sur le canal qui permet d'estimer le paramètre $\lambda$, $X_n$ et $\overline{X}$, $\lambda$ étant le taux d'arrivée des trames estimé au point d'accès sur la fenêtre temporelle $t_{obs}$ et $\overline{X}$ la durée moyenne des trames sur la même durée d'observation.

La figure 5 est un organigramme des étapes principales d'un mode de réalisation du procédé selon la première mise en oeuvre de l'invention.

La figure 6 est un organigramme du déroulement de l'étape de sélection d'une interface et d'un mode de transmission de la figure 5 selon un premier mode de réalisation du procédé qui met en oeuvre un algorithme d'adaptation de lien BLV donc dans un contexte d'interfaces multi technologies.

La figure 7 est un organigramme du déroulement de l'étape de sélection de la figure 5 selon un deuxième mode de réalisation du procédé qui met en oeuvre un algorithme d'adaptation de lien MISER.

La figure 8 est un schéma un exemple de mise en oeuvre d'un mode de réalisation mono technologie de l'invention avec un système de communication de type WiFi comprenant un point d'accès AP et deux stations $STA_1$, $STA_2$.

La figure 9 représente l'atténuation du canal de propagation à 5 GHz.

La figure 10 est un schéma de la structure simplifiée d'un point d'accès selon l'invention.

**Description d'un mode de réalisation de l'invention**

L'invention est décrite en considérant une utilisation particulière à un système de communication sans fil dit système WiFi comprenant un point d'accès et deux stations qui communiquent avec le point d'accès. Le canal de transmission dont l'accès est de type aléatoire est partagé entre les entités de communication ie le point d'accès et les stations. Il est en outre considéré qu'un seul service est activé par un utilisateur et qu'une station est utilisée par un seul utilisateur. Il s'agit bien entendu d'un exemple illustratif non limitatif qui peut être généralisé à plus de deux stations, à plus d'un service par station et à plus d'un utilisateur par station et que la généralisation de l'exemple décrit est à la portée de l'homme du métier compte tenu de la description donnée.

Selon l'exemple, le point d'accès et les stations sont compatibles du standard IEEE 802.11_2012. Le point d'accès et les stations comprennent différents modes de transmission auxquels sont associés respectivement des débits instantanés différents.

Le procédé selon l'invention est mis en oeuvre par le point d'accès. Le procédé proposé a pour objectif de déterminer le mode le plus efficace pour transmettre des données relatives à un service à destination de la 1ère station tout en respectant un débit moyen Dmoy et une QoS pour cette station et tout en tenant compte de l'occupation du canal par des données transmises entre le point d'accès et la 2nde station.

Compte tenu de l'accès aléatoire au canal de transmission, le trafic sur le canal illustré par la figure 3 peut être modélisé par une loi de Poisson de paramètre $\lambda \cdot t_{OBS}$ avec $\lambda$ la fréquence d'arrivée de N trames sur une fenêtre d'observation $t_{OBS}$ pour l'ensemble du système WiFi :

$$P\{X(t + t_{OBS}) - X(t) = N\} = e^{-\lambda \cdot t_{OBS}} \cdot \frac{(\lambda \cdot t_{OBS})^N}{N!} \qquad (2)$$

L'invention met en oeuvre une métrique $\gamma$ d'évaluation de l'occupation temporelle du canal de transmission dans le but de sélectionner le mode de transmission et éventuellement l'interface présentant l'efficacité énergétique la plus élevée pour transmettre une trame qui réponde aux contraintes données. L'efficacité énergétique d'un mode de transmission associée à une interface et un mode de transmission est le rapport entre le débit moyen et l'énergie nécessaire à l'émission pour transmettre le service, c'est-à-dire la puissance requise à l'émission intégrée sur une fenêtre temporelle T (correspondant à la durée d'observation permettant de déterminer le débit moyen) pour délivrer ce débit en respectant la contrainte QoS (BER cible, ou PER cible).

Cette métrique $\gamma$ correspond à un coefficient d'étalement temporel qui représente le rapport entre le temps de disponibilité du canal de transmission sur une période d'observation $t_{OBS}$ et le temps nécessaire à la transmission d'une trame $t_{tra}$. Le temps de disponibilité du canal de transmission dans un contexte d'accès aléatoire est évalué par le temps d'accès moyen $t_{acc}$ au canal de communication. La métrique $\gamma$ s'exprime selon la relation :

$$\gamma = 10 \cdot \log_{10} \left( \frac{t_{acc}}{t_{tra}} \right) \qquad (3)$$

L'occupation du canal s'exprime sous la forme :

$$G = \lambda \cdot \bar{X} \qquad (4)$$

avec :

$$E\{t_n\} = \frac{1}{\lambda} \qquad (5)$$

$$E\{X_n\} = \bar{X} \qquad (6)$$

où l'opérateur $E\{x\}$ représente l'espérance mathématique de la variable $x$ et $\bar{X}$ est la durée temporelle moyenne des trames PPDU transmises sur le canal.

Le temps d'accès moyen $t_{acc}$ au canal de transmission est alors donné par la formule suivante :

$$t_{acc} = E\{t_n - X_n\} = \frac{1}{\lambda} - \bar{X} \tag{7}$$

En combinant les relations (4) et (7), il vient :

$$t_{acc} = \frac{1 - \lambda \bar{X}}{\lambda} = \frac{1 - G}{\lambda} \tag{8}$$

Le temps $t_{tra}$ nécessaire à la transmission d'une trame dépend du mode de transmission m utilisé, il s'exprime selon la relation :

$$t_{tra_m} = t_{header} + \frac{Data}{Datarate(m)} \tag{9}$$

avec $t_{header}$ la durée temporelle de l'entête de la trame, *Data* la charge en octets du PSDU à transmettre dans la trame PPDU, *Datarate* le débit instantané correspondant à l'interface et au mode de transmission m utilisé.

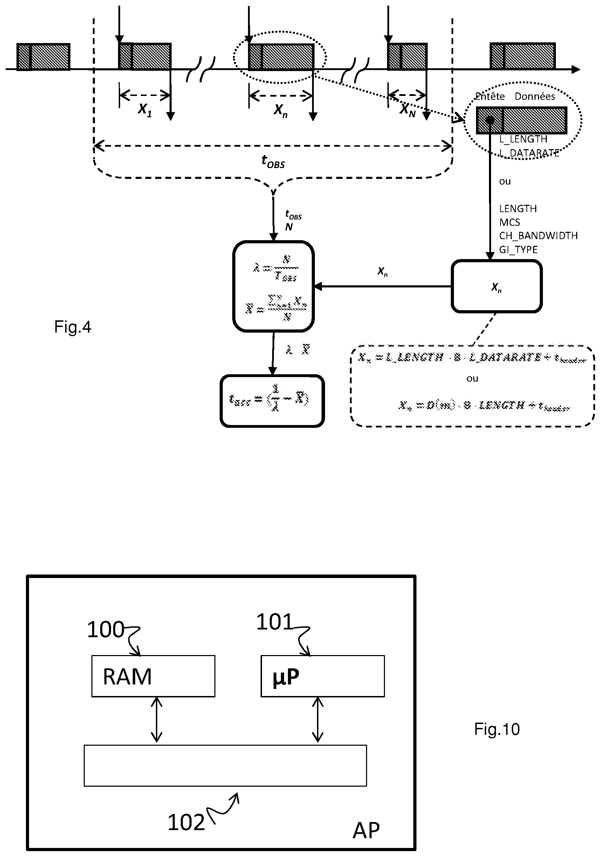

En référence à la figure 4, l'estimation du paramètre $\lambda$ peut se faire en comptant au niveau du point d'accès le nombre N de trames transmises sur le lien pendant la durée $t_{OBS}$ : $\lambda = N/t_{OBS}$.

Et l'estimation de $\bar{X}$ peut se faire en exploitant des informations contenues dans l'entête des trames et plus particulièrement pour les trames PPDU : la taille du PSDU et le schéma de modulation et de codage MCS (ou le débit correspondant) utilisé. Ainsi, $\bar{X} = \frac{\sum_1^N X_n}{N}$ avec $X_n$ la durée de la nième trame PPDU transmise pendant la durée d'observation, $\bar{X}$ la taille moyenne des N trames PPDU transmises pendant la durée d'observation. Le temps $t_{acc}$ moyen d'accès au canal de communication pendant la durée d'observation est alors calculé connaissant les valeurs de $\lambda$ et de $\bar{X}$.

Par exemple, le standard IEEE 802.11_2012 [2] chapitre *20.3.2 PPDU formats* distingue trois types de PPDU : Non-HT, HT-mixed HT-greenfield. Pour ces trois formats, l'entête est toujours constitué des paramètres suivants : un champ de synchronisation STF, un champ d'estimation du canal LTF et un champ d'informations concernant le signal SIG. Pour connaitre la taille d'un PPDU, il faut exploiter des informations contenues dans le signal SIG.

Dans le cas d'un PPDU non-HT, le champ L-SIG (*Figure 20-5 du standard*) contient le débit (*L_DATARATE*) correspondant au MCS utilisé pour coder le PSDU et contient la taille en octets (*L_LENGTH*) du PSDU. Dans le cas d'un PPDU HT (mixed ou greenfield), les champs HT-SIG$_1$ et HT-SIG$_2$ (*Figure 20-6*) contiennent le MCS (*MCS*), la largeur de bande (*CH_BANDWIDTH*) et le type d'intervalle de garde (GI_TYPE) utilisés pour la transmission du PSDU ainsi que sa taille en octets (*LENGTH*). Le MCS, la taille de la bande de transmission et l'intervalle de garde permettent d'en déduire le débit équivalent du PSDU (les débits sont disponibles dans les tables 20-30 à 20-40 du standard précité). La durée temporelle du PSDU est obtenue en multipliant le débit et la taille du PSDU.

Par exemple, pour un PPDU de type HT-mixed avec le mode m défini par *MCS* = 15, *GI_TYPE* = 0 (LONG_GI) et *CH_BANDWIDTH* = 1 (HT_CBW40) la table 20-35 du standard précité reproduite en Annexe A donne un débit instantané **D(m)** de 270.0 Mb/s pour l'intervalle de garde de 800 ns. Avec une longueur *LENGHT* = 65 535, la taille du champ PSDU à transmettre est de 65 535 octets et sa durée de : $X_{PSDU} = \frac{65\,535 \cdot 8}{270.0e^6} \simeq 1.9\,ms$. La taille maximum de l'entête HT-mixed est de 64 $\mu$s ce qui donne une taille $X_m$ de la trame PPDU d'environ 2 ms.

L'observation du trafic sur le canal pendant $t_{OBS}$ permet donc au point d'accès de déterminer $\lambda$ et $\bar{X}$ et d'en déduire G ainsi que $t_{acc}$ et $t_{tra_m}$ à l'instant t qui correspond à la fin de la période d'observation.

Le nouveau mode $m_t$, à sélectionner à un instant *t'* postérieur à l'instant *t, t'* = *t* + $\Delta t$, doit garantir le même débit moyen qu'à l'instant t pour transmettre les trames du service n qui contiennent en moyenne *Data* octets d'information utile et qui ont chacune une durée temporelle $t_{tra_{m_{t'}}}$ :

$$D_{moy}(t, m_t) = D_{moy}(t', m_{t'}) \tag{10}$$

Un débit moyen tient compte de la probabilité de transmettre avec succès les trames du service n, c'est-à-dire sans collision, il peut donc s'exprimer sous la forme :

$$D_{moy}(t, m_t) = P_S(G(t, m_t)) \cdot \lambda_n(t, m_t) \cdot 8 \cdot Data \tag{11}$$

En effet, compte tenu que le canal de transmission est partagé entre les stations et donc entre les services requis par les utilisateurs et d'accès aléatoire, l'occupation $G$ du canal donnée par la relation (4) doit être pondérée. Cette pondération est nécessaire pour tenir compte des collisions pour estimer le trafic réellement transmis, c'est-à-dire sans collision : $G$ est alors désigné par trafic entrant et le trafic sans collision $S$ est dit trafic sortant. L'expression du trafic sortant en fonction de $G$ dépend du protocole d'accès au canal utilisé.

Pour un protocole ALOHA décrit dans [3], le trafic sortant S peut s'exprimer sous la forme :

$$S = Ge^{-2G} \tag{12}$$

Pour un protocole ALOHA par *slots* temporels, le trafic sortant $S$ peut s'exprimer sous la forme

$$S = Ge^{-G} \tag{13}$$

Avec un protocole ALOHA, lorsque le trafic entrant est trop élevé ($G \to \infty$), le trafic sortant est nul puisque la totalité des paquets subissent des collisions. En revanche si le trafic entrant est très faible ($G \to 0$) alors la quasi-totalité des paquets sont correctement transmis.

Les protocoles CSMA permettent d'augmenter la proportion de paquets correctement transmis par rapport au protocole ALOHA.

Dans le cas du CSMA/CD décrit dans [2] au chapitre 20, si le délai de retransmission des trames est grand comparé à la durée des trames et que les arrivées des trames sont considérées indépendantes, il est connu que :

$$S = \frac{Ge^{-aG}}{G(1+2a)+e^{-aG}} \tag{14}$$

Dans le cas du CSMA/CA fonctionnant par *slots,* il est connu que :

$$S = \frac{aGe^{-aG}}{1+a-e^{-aG}} \tag{15}$$

La probabilité de succès $P_S(G)$ qu'un paquet soit transmis sans collision sur le canal de communication lorsque l'occupation du canal de communication est $G$ s'exprime sous la forme :

$$P_S(G) = \frac{S}{G} \tag{16}$$

Dans certaines conditions et avec un protocole CSMA le débit sortant peut être approximé par la relation suivante :

$$S \simeq \frac{G}{1+G} \tag{17}$$

Avec un protocole CSMA, la probabilité de succès $P_S(G)$ qu'une trame PPDU soit transmise sans collision sur le canal peut donc s'écrire :

$$P_S(G) \simeq \frac{1}{1+G} \tag{18}$$

En combinant les relations (18) et (11), le débit moyen peut s'exprimer sous la forme :

$$D_{moy_n}(t, m_t) \simeq \lambda_n(t, m_t) \cdot \frac{1}{1+G(t,m_t)} \cdot 8 \cdot Data_n \tag{19}$$

Soit $G'$ la part de trafic du aux autres services que le service n :

$$G^{'} = G - \lambda_n \overline{X_n} \tag{20}$$

à laquelle correspond une fréquence d'arrivée de trames :

$$\lambda^{'} = \lambda - \lambda_n \tag{21}$$

Le débit moyen peut alors s'exprimer sous la forme :

$$D_{moy_n}(t, m_t) \simeq \frac{\lambda_n(t, m_t)}{1 + G^{'}(t, m_t) + \lambda_n(t, m_t)\overline{X_n}(t, m_t)} \cdot 8 \cdot Data_n \tag{22}$$

A partir de la relation (22), le taux de transmission des trames du service n peut être exprimé sous la forme :

$$\lambda_n(t, m_t) \simeq \frac{1 + G^{'}(t, m_t)}{\frac{8 \cdot Data_n}{D_{moy_n}(t, m_t)} - \overline{X_n}(t, m_t)} \tag{23}$$

Cette relation (23) permet d'évaluer le taux de transmission des trames du service n à l'instant $t' = t + \Delta t$ transmises avec succès :

$$\lambda_n(t', m_{t'}) = \frac{1 + G^{'}(t, m_t)}{\frac{8 \cdot Data_n}{D_{moy_n}(t, m_t)} - t_{tra_{nm_{t'}}}} \tag{24}$$

en considérant que l'occupation du canal du aux autres services que le service n reste inchangé au temps $t'$ par rapport à ce qu'il est au temps $t$.

En combinant les relations (8), (20) et (21), le temps moyen d'accès $t_{acc_{nm_{t'}}}$ au canal de communication à l'instant $t'$ pour les trames du service n à transmettre peut être estimé par :

$$t_{acc_{nm_{t'}}} = \frac{1 - (G^{'} + \lambda_n(t', m_{t'}) \cdot t_{tra_{nm_{t'}}})}{\lambda^{'} + \lambda_n(t', m_{t'})} \tag{25}$$

Pour un service n donné, pour sélectionner à l'instant $t'$ un mode m parmi M modes, le procédé détermine une valeur de métrique $\gamma_{nm_{t'}}$ pour chaque mode m. Cette métrique revient à comparer une évaluation du temps moyen d'accès $t_{acc}$ au canal de communication au temps $t'$ à une évaluation du temps $t_{tra_{nm_{t'}}}$ nécessaire au même temps $t'$ pour transmettre une trame PPDU relative au service n avec ce nouveau mode m :

$$\gamma_{nm_{t'}} = 10 \cdot \log_{10}\left(\frac{t_{acc_{nm_{t'}}}}{t_{tra_{nm_{t'}}}}\right) \tag{26}$$

Pour un mode m, le temps $t_{tra_{nm_{t'}}}$ nécessaire pour transmettre une trame PPDU est déterminé à partir de la relation (9) et le temps moyen d'accès $t_{acc_{nm_{t'}}}$ est évalué à partir de la relation (25) en remplaçant le temps $t_{tra_{nm_{t'}}}$ par la valeur déterminée au moyen de la relation (9) et en remplaçant $\lambda_n(t', m_{t'})$ par la valeur déterminée au moyen de la relation (24). Connaissant les valeurs de $t_{tra_{nm_{t'}}}$ et de $t_{acc_{nm_{t'}}}$, le procédé détermine la métrique $\gamma_{nm_{t'}}$.

Le procédé compare la valeur de la métrique $\gamma_{nm_{t'}}$ à un seuil dont la valeur $\gamma_{min}$ peut être déduite de simulations. Si la métrique $\gamma_{nm_{t'}}$ est inférieure au seuil, le mode m est éliminé de la sélection du procédé d'adaptation de lien.

La valeur minimale $\gamma_{min}$ du seuil est zéro ce qui correspond à des temps $t_{tra_{nm_{t'}}}$ et $t_{acc_{nm_{t'}}}$ quasiment

identiques, l'occupation du canal est maximale ; il n'y a plus de « trous » entre les trames transmises. La condition $\gamma_{min}$ = 0 impose que le temps d'accès moyen au canal pour un service n doit être au moins égal au temps de transmission d'une trame du service n.

Une fois le mode *m* de la station *n* sélectionné, l'occupation du lien *G* et le taux d'arrivée global des trames $\lambda$ peuvent être approchés par les relations :

$$G \simeq G' + G_{nm_{t'}} \tag{27}$$

$$\lambda \simeq \lambda' + \lambda_n(t', m_{t'}) \tag{28}$$

Selon une première mise en oeuvre de l'invention, une présélection est réalisée à l'aide de la métrique $\gamma$ parmi les différents modes de transmission $Mode_1,...Mode_M$ de l'entité à laquelle correspond un service n requis par un utilisateur de l'entité. Cette présélection permet de déterminer quels modes peuvent être utilisés pour réaliser la transmission en tenant compte de l'état du canal de transmission. En d'autres termes, la présélection permet d'écarter des modes qui ne peuvent pas permettre la transmission des trames PPDU tout en garantissant un débit moyen $D_{moy}$, une qualité de service QoS et une occupation optimale du canal.

Si plusieurs modes de transmission sont disponibles après cette présélection, une sélection est réalisée sur les modes présélectionnés en mettant en oeuvre une autre métrique.

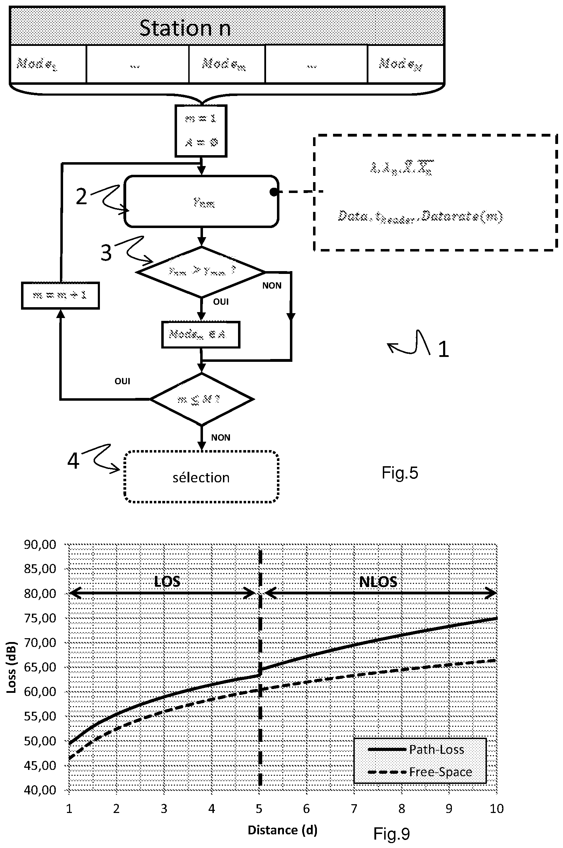

La figure 5 est un organigramme des étapes principales d'un mode de réalisation du procédé selon la première mise en oeuvre de l'invention dans un contexte mono technologie, c'est-à-dire que tous les modes considérés appartiennent à une même interface de transmission donnée.

Selon le mode décrit, le point d'accès comprend différents modes de transmission auxquels sont associés respectivement des débits instantanés différents et met en oeuvre le procédé 1 selon l'invention. Selon le mode illustré, un compteur de mode est initialisé à un, m=1, et l'ensemble A des modes pré sélectionnés est initialisé à l'ensemble vide.

Dans une première étape 2, le procédé calcule la métrique $\gamma_{n,m}$ pour le service n et le mode m sur une fenêtre d'observation $t_{OBS}$.

Dans une deuxième étape 3, le procédé compare la métrique $\gamma_{n,m}$ à une valeur seuil $\gamma_{n,m}$ : $\gamma_{n,m} > \gamma_{n,m}$?

Si la métrique dépasse strictement le seuil alors le mode m est pré sélectionné ie le mode $Mode_m$ appartient à l'ensemble A : $Mode_m \in A$ et le procédé détermine ensuite lors d'un test si la valeur du compteur est inférieure à M : $m \leq M$ ? ie s'il reste des modes.

Sinon, le procédé effectue le test.

Si lors du test la valeur du compteur est inférieure à M alors le compteur est incrémenté de un, $m = m + 1$, et le procédé reboucle sur la première étape.

Sinon, lors d'une troisième étape 4, le procédé effectue ensuite une sélection selon un critère déterminé pour sélectionner un mode de transmission parmi les différents modes pré sélectionnés qui appartiennent à l'ensemble A.

Cette sélection intervient en mettant par exemple en oeuvre un algorithme connu d'adaptation de lien.

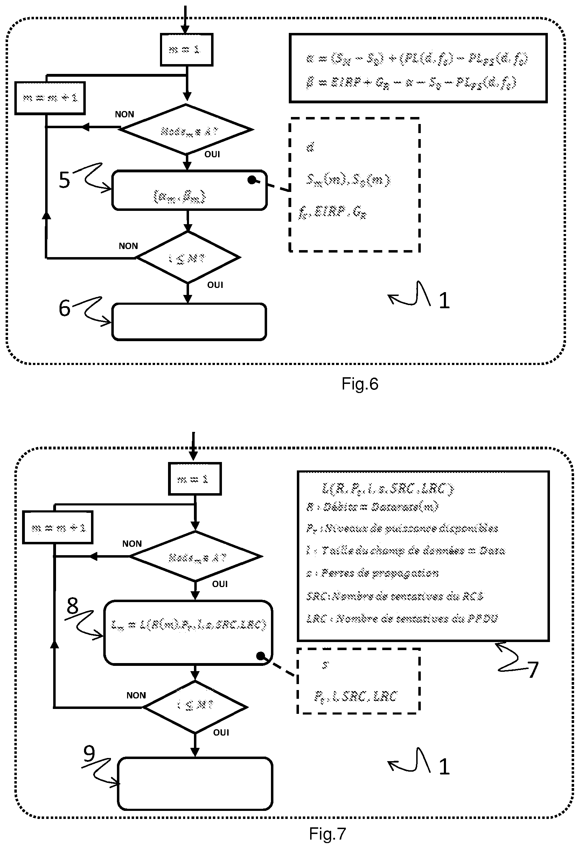

Selon un premier mode de réalisation illustré par la figure 6, l'algorithme d'adaptation de lien exploite une métrique BLV $\{\alpha, \beta\}$ (Bilan de Liaison Verte) constituée des deux paramètres $\alpha$ et $\beta$ selon un procédé décrit dans la demande de brevet WO2011/083238 publiée le 14/07/2011. La figure 6 représente uniquement la troisième étape de la figure 5.

Ce mode est particulièrement adapté lorsque les modes de transmission sont associés à des interfaces de transmission différentes. Cette métrique BLV $\{\alpha, \beta\}$ permet de sélectionner l'interface de transmission et le mode de transmission qui permettent de minimiser la puissance de transmission tout en respectant une contrainte de débit instantané, de QoS et de distance émetteur-récepteur. Elle est constituée des deux paramètres $\alpha$ et $\beta$.

Le paramètre $\alpha$ permet de sélectionner l'interface de transmission et le mode de transmission subissant le moins de dégradation multi-trajets au niveau de la couche physique. Elle est la somme de deux sous-paramètres :

$$\alpha = MCM + PLM$$

MCM, la marge du canal multi-trajets qui correspond à la différence de puissance requise entre le cas idéal et le cas réaliste de transmission :

$$MCM = SNR_c - SNR_c^{AWGN}$$

$$MCM = S_m - S_0$$

$SNR_c$ et $SNR_c^{AWGN}$ sont respectivement les SNR requis dans le cas réaliste et le cas idéal (canal AWGN). $S_m$ et $S_0$ sont respectivement les puissances requises dans le cas réaliste et le cas idéal (canal AWGN).

PLM, l'atténuation relative de propagation qui correspond à la différence des pertes dues à la propagation entre le cas idéal et le cas réaliste de transmission :

$$PLM = PL(d, f_c) - PL_{FS}(d, f_c)$$

$$PLM = 10 \cdot \text{n} \cdot \log_{10}\left(\frac{d}{d_0}\right) - 10 \cdot \log_{10}\left(\frac{d}{d_0}\right)^2 + \sigma$$

$$PLM = 10 \cdot \log_{10}\left(\frac{d}{d_0}\right)^{n-2} + \sigma$$

où $PL(d)$ représente les pertes de propagation dans le cas réaliste (multi-trajets), $PL_{FS}(d)$ représente les pertes de propagation dans le cas idéal (espace-libre), $d$ est la distance de la cible, $f_c$ est la fréquence porteuse, $d_0$ est la distance de référence, $n$ caractérise le canal multi-trajets, il correspond à la décroissance exponentielle due à la distance, $\sigma$ correspond aux effets de masque.

Le procédé calcule 5 la métrique $\alpha$ selon la relation :

$$\alpha = (S_M - S_0) + (PL(d, f_c) - PL_{FS}(d, f_c)). \tag{29}$$

Le paramètre $\beta$ correspond à la différence entre la puissance disponible et la puissance requise pour assurer une QoS (c'est-à-dire un TEB cible évalué sur les champs de données MSDU) à une distance d émetteur-récepteur. Ce paramètre permet d'ajuster la puissance d'émission du mode/interface de transmission sélectionné afin de réduire la puissance rayonnée et réaliser un contrôle de puissance dynamique.

$$\beta = ARP(d, f_c) - S_M$$

La puissance moyenne reçue ARP(d) s'exprime :

$$ARP(d, f_c) = EIRP + G_R - PL(d, f_c)$$

où $EIRP$ est la puissance isotrope rayonnée équivalente de l'émetteur, $G_R$ est le gain de l'antenne de réception.

Le procédé calcule 5 la métrique $\beta$ qui s'exprimer selon la relation :

$$\beta = EIRP + G_R - \alpha - S_0 - PL_{FS}(d, f_c) \tag{30}$$

Ainsi, l'algorithme BLV $\{\alpha, \beta\}$ effectue une sélection 6 d'un mode de transmission dans un terminal multi-mode, en optimisant un bilan de liaison normalisé qui permet de comparer des systèmes opérant dans des bandes différentes (RF, optique, filaire) et présentant des gammes de variation puissance indépendantes. La métrique $\alpha$ évalue la dégradation relative globale introduite par le canal multi-trajet sur le dispositif de transmission et dans le milieu de propagation. La métrique $\beta$ mesure l'excédent de puissance entre la puissance disponible $ARP(d,f_c)$ et la puissance requise $S_M$ pour assurer la communication avec une QoS donnée. Ces deux métriques se mesurent en dB.

Selon un deuxième mode de réalisation illustré par la figure 7, l'algorithme d'adaptation de lien est un algorithme de type MISER. La figure 7 représente uniquement la troisième étape de la figure 5. L'algorithme MISER comprend une phase d'initialisation 7 pendant laquelle est effectué le calcul de tables de qualités et comprend une phase d'exécution en temps-réel.

Lors de la phase d'initialisation 7, le procédé estime deux paramètres :

$L(R,P_T,l,s,SRC,LRC)$ : le nombre de bits qui seront correctement transmis,
$E(R,P_T,l,s,SRC,LRC)$ : l'énergie nécessaire pour transmettre $L$.

Ces deux estimations sont calculées récursivement en considérant toutes les combinaisons possibles des paramètres $R,P_T,l,s,$ SRC et LRC.

Puis, à partir des estimations des paramètres, le procédé estime l'efficacité énergétique $J$ selon la relation (1) lors de la phase d'exécution en temps-réel, en considérant les six paramètres :$R,P_T,l,s,$ SRC, LRC. La station qui veut transmettre une charge $l$ estime 8 les pertes de propagation $s$ et récupère le nombre de tentatives de transmission du RTS (SRC) et du PPDU (LRC). En fonction du quadruplet de données $(l,s,SRC,LRC)$, la station récupère, dans les tables de qualités calculées hors-fonctionnement, la combinaison des paramètres $(R,P_T)$ à utiliser pour maximiser l'efficacité énergétique de la transmission. Pour chacune des combinaisons possibles $(l,s,SRC,LRC)$ la combinaison $(R,P_T)$ maximisant $J$ est stockée.

Le procédé sélectionne 9 le mode m qui maximise l'efficacité énergétique de la transmission.

Cet algorithme permet donc de maximiser l'efficacité de la transmission d'une charge de données mais est assez contraignant puisqu'il impose l'utilisation du RTS/CTS (ce qui augmente la consommation du système puisque l'envoi des trames RTS/CTS à un cout énergétique). De plus, il faut calculer hors fonctionnement l'efficacité énergétique correspondant à toutes les combinaisons possibles des paramètres $(R,P_T,l,s,SRC,LRC)$.

L'utilisation des trames RTS/CTS permet de réduire le nombre de collisions dues au problème de la station cachée mais encombre le canal (pour chaque PSDU à transmettre, il faut auparavant envoyer un RTS et recevoir un CTS). Ce type d'algorithme MISER combine avantageusement une optimisation du schéma de modulation et de codage MCS et une gestion de la puissance de transmission.

Selon une variante, l'algorithme MISER est adapté pour être mis en oeuvre sans activation du mécanisme RTS/CTS. Selon cette adaptation, l'algorithme estime l'efficacité énergétique selon la relation suivante :

$$\eta_{nm}^p = \frac{L_{nm}:Quantité\ de\ bits\ transmis\ avec\ succès}{E_{nm}:Energie\ dépensée\ pour\ transmettre} \qquad (31)$$

A cette fin, le procédé estime les paramètres suivants :

$$L_{nm} = P_S(G_{nm}) \cdot 8 \cdot Data_n \qquad (32)$$

$$E_{nm} = t_{tra_{nm}} \cdot P_{T_{nm}}$$

où $P_{T_{nm}}$ désigne la puissance nécessaire à l'émission pour adresser chacune des stations avec la qualité de service désirée, par exemple avec un $BER = 10^{-5}$ (avec une marge de sécurité de 3 dB). Cette puissance s'exprime sous la forme suivante :

$$P_{T_{nm}} = EIRP + G_R - \beta_{nm} + 3\ dB \qquad (33)$$

où $EIRP$ est la puissance isotrope rayonnée équivalente de l'émetteur, $G_R$ est le gain de l'antenne de réception

Le procédé estime l'efficacité énergétique à l'instant $t$ pour un service n :

$$\eta_{nm_t} = \frac{8 \cdot Data_n}{(1+G'+\lambda_n(t,m_t)\,t_{tra_{nm}})t_{tra_{nm_t}} \cdot P_{T_n}} \qquad (34)$$

Pour déterminer le mode $m_{t'}$ à sélectionner à l'instant $t'$ pour le service n, le procédé estime l'efficacité énergétique prévisionnelle à cet instant $t'$ :

$$\eta_{nm_{t'}} = \frac{8 \cdot Data_n}{\left(1 + G' + \lambda_n(t', m_{t'})\, t_{tranm_{t'}}\right) \cdot t_{tranm_{t'}} \cdot P_{Tn}} \tag{35}$$

La sélection selon l'algorithme MiSer adapté consiste à choisir le mode qui minimise $\eta_{nm_{t'}}$.

La figure 8 illustre un exemple de mise en oeuvre dans un contexte d'adaptation de lien mono technologie. Selon l'exemple, le système de communication de type WiFi comprend un point d'accès AP et deux stations $STA_1$, $STA_2$.

La station $STA_1$ est distante du point d'accès AP d'une distance $d_1$ = 4$m$ et veut établir une communication avec l'AP avec un débit moyen $D_1$ = 7.5 $Mbit/s$. La station $STA_2$ est distante du point d'accès AP d'une distance $d_2$ = 6$m$ et veut établir une communication avec l'AP avec un débit moyen $D_2$ = 7.5$Mbit/s$. Un control de puissance est mis en oeuvre pour que chaque transmission se fasse avec la puissance minimum requise. Les deux stations ont les paramètres suivants :

- Fréquence porteuse : $f_c$ = 5 $GHz$,
- Taille de la bande de transmission : $B$ = 40 $MHz$,
- Nombre de flux spatiaux par station : $N_{SS}$ = 2,
- Puissance rayonnée maximum : $EIRP$ = 23 $dBm$,
- Gain de réception des antennes : $G_R$ = 0 $dB$,
- Charge utile moyenne des PSDU : $Data$ = 8000 $octets$,
- Durée des entêtes (headers) : $t_{header}$ = 20 $\mu s$.

La méthode d'accès au canal est de type CSMA/CA et le point d'accès estime les paramètres à l'instant t : $\lambda$, $\lambda_n$, $X$, $\overline{X_n}$. Le point d'accès et chacune des stations ne comportent qu'une interface de transmission de type 802.11et disposent des dix modes de transmission suivants :

| m | 1 | 2 | 3 | 4 | 5 | 6 | 7 | 8 | 9 | 10 |
|---|---|---|---|---|---|---|---|---|---|---|
| MIMO | SDM | | | | | STBC | | | | |
| MCS | QPSK ½ | QPSK ¾ | 16-QAM ½ | 16-QAM ¾ | 64-QAM $\frac{2}{3}$ | QPSK ½ | QPSK ¾ | 16-QAM ½ | 16-QAM ¾ | 64-QAM $\frac{2}{3}$ |

Les débits instantanés $D_m$ associés sont les suivants :

| m | 1 | 2 | 3 | 4 | 5 | 6 | 7 | 8 | 9 | 10 |
|---|---|---|---|---|---|---|---|---|---|---|
| $D_m$ (Mbps) | 54 | 81 | 108 | 162 | 216 | 27 | 40.5 | 54 | 81 | 108 |

Au temps $t$ = 0, l'AP utilise le mode 6 pour délivrer un débit moyen $D_1$ = 7.5 $Mbps$ à la station $STA_1$. L'occupation du lien est alors $G$ = 38.96%, $\lambda_1$ = 163 $trames/s$.

Conformément à la description d'une mise en oeuvre du procédé selon l'invention illustrée par la figure 5, le temps $t_{tra_{nm}}$ est déterminé à partir de la relation (9) pour chacun des modes et pour le service 2 associé à la station 2 :

| m | 1 | 2 | 3 | 4 | 5 | 6 | 7 | 8 | 9 | 10 |
|---|---|---|---|---|---|---|---|---|---|---|
| $t_{tra_{2m}}$ | 1.21 | 0.81 | 0.61 | 0.42 | 0.32 | 2.39 | 1.60 | 1.21 | 0.81 | 0.61 |

Le procédé évalue le temps $t_{acc_{2m}}$ et calcule la métrique $\gamma_{2m}$ avec comme contrainte de garantir le débit $D_2$ = 7.5 $Mbps$ à la station $STA_2$ :

| m | 1 | 2 | 3 | 4 | 5 | 6 | 7 | 8 | 9 | 10 |
|---|---|---|---|---|---|---|---|---|---|---|
| $t_{acc_{2m}}$ | 1.08 | 1.35 | 1.49 | 1.61 | 1.68 | 0.18 | 0.80 | 1.08 | 1.35 | 1.49 |
| $\gamma_{2m}$ | | 2.23 | 3.85 | 5.90 | 7.24 | | | | **2.23** | 3.85 |

La métrique $\gamma_{2m}$ permet d'éliminer les modes 1, 6, 7 et 8 de la sélection car les valeurs obtenues pour cette métrique sont inférieures au seuil minimal $\gamma_{min} = 0$.

La sélection est ensuite effectuée avec un algorithme d'adaptation de lien.

Selon un 1er mode de réalisation, le procédé selon l'invention met en oeuvre un algorithme BLV conformément au mode décrit en relation avec la figure 6. Les paramètres $S_M$ et $S_0$ sont donnés dans [4] en considérant un canal de propagation de type TGn model B. Les paramètres $PL(d,\ 5\ GHz)$ et $PL_{fs}(d,\ 5\ GHz)$ sont représentés sur la figure 9 de modèles de pertes par propagation. Le procédé calcule :

| $m$ | 1 | 2 | 3 | 4 | 5 | 9 | 10 |
|---|---|---|---|---|---|---|---|
| $\alpha_{2m}$ | 15.08 | 18.12 | 17.12 | 17.76 | 19.11 | **7.16** | 8.61 |
| $\beta_{2m}$ | 21.78 | 16.78 | 14.78 | 10.18 | 4.78 | 20.78 | 15.28 |

La métrique $\alpha$ conduit à la sélection du mode 9. Ainsi, le procédé selon l'invention est avantageux car il permet d'améliorer l'efficacité de l'algorithme BLV. En effet, l'algorithme BLV conduit à la sélection du mode 6. Selon l'invention, la charge du canal est évaluée au moyen de la métrique $\gamma_{2m}$. Le procédé selon l'invention permet d'éviter la surcharge du canal en éliminant de la sélection le mode 6 qui conduit à une surcharge du canal.

Selon un 2nd mode de réalisation, le procédé selon l'invention met en oeuvre un algorithme MISER adapté conformément au mode décrit en relation avec la figure 7.

Le procédé calcule initialement en utilisant la relation (34) $\eta_1 = 171.13$ $Gbit/J.$ Le procédé calcule en utilisant la relation (35) :

| $m$ | 1 | 2 | 3 | 4 | 5 | 9 | 10 |
|---|---|---|---|---|---|---|---|
| $\eta_{2m_{t'}}$ | 12.41 | 6.15 | 5.27 | 2.76 | 1.06 | **15.46** | 5.91 |

La détermination de l'efficacité énergétique $\eta_{2m_{t'}}$ conduit à la sélection du mode 9. Ainsi, le procédé selon l'invention est avantageux car il permet d'améliorer l'efficacité de l'algorithme MISER adapté. En effet, l'algorithme MISER adapté conduit à la sélection du mode 6. Selon l'invention, la charge du canal est évaluée au moyen de la métrique $\gamma_{2m}$. Le procédé selon l'invention permet d'éviter la surcharge du canal en éliminant de la sélection le mode 6 qui conduit à une surcharge du canal.

La structure simplifiée d'un point d'accès mettant en oeuvre un procédé d'adaptation de lien selon l'invention est décrit en relation avec la figure 10.

Un tel point d'accès AP comprend un module de mémorisation 100 comprenant une mémoire tampon RAM, une unité de traitement 101, équipée par exemple d'un microprocesseur µP et pilotée par le programme d'ordinateur 102, mettant en oeuvre le procédé d'adaptation de lien selon l'invention.

A l'initialisation, les instructions de code du programme d'ordinateur 62 sont par exemple chargées dans la mémoire RAM avant d'être exécutées par le processeur de l'unité de traitement 61. L'unité de traitement 61 reçoit en entrée les données transmises sur le canal. Le microprocesseur de l'unité de traitement 61 met en oeuvre les étapes du procédé d'adaptation de lien décrit précédemment, selon les instructions du programme d'ordinateur 62, pour effectuer une détermination de la métrique $\gamma$ d'occupation temporelle du canal.

Pour cela, le point d'accès comprend :

- M modes de transmission auxquels sont associés respectivement des débits instantanés différents,
- un module de détermination pour un mode de transmission donné de la valeur d'une première métrique $\gamma_{n,m}$ d'occupation temporelle du canal,
- un module de comparaison des valeurs de la métrique $\gamma_{n,m}$ pour différents modes à une valeur seuil pour pré sélectionner des modes de transmission,
- un module d'adaptation de lien pour effectuer la sélection selon un critère déterminé parmi les différents modes pré sélectionnés.

Lors de l'exécution par le processeur de l'unité de traitement 61 des instructions de code du programme d'ordinateur 62 :

le processeur initialise un compteur de mode à un et une variable comprenant l'ensemble A des modes pré sélectionnés à l'ensemble vide,
le module de détermination calcule la métrique $\gamma_{n,m}$ pour le service n et le mode m sur une fenêtre d'observation $t_{OBS}$,
le processeur compare la métrique $\gamma_{n,m}$ à une valeur seuil $\gamma_{n,m}$ : $\gamma_{n,m} > \gamma_{n,m}$? Si la métrique dépasse strictement le seuil alors le mode m est pré sélectionné ie le mode Mode$_m$ est rangé dans la variable comprenant l'ensemble A : Mode$_m \in$A. Le processeur compare la valeur du compteur à M : m $\leq$ *M* ? ie s'il reste des modes. Si lors du test la valeur du compteur est inférieure à M alors le compteur de mode est incrémenté de un, *m* = *m* + 1,

le module d'adaptation de lien effectue la sélection selon un critère déterminé parmi les différents modes pré sélectionnés qui appartiennent à l'ensemble A lorsque la valeur du compteur est strictement supérieure à M.

Annexe A

**Table 20-35 MCS parameters for optional 40 MHz, NSS = 2, NES = 1**

| MCS Index | Modulation | R | $N_{BPSCS}(i_{SS})$ | $N_{SD}$ | $N_{SP}$ | $N_{CBPS}$ | $N_{DBPS}$ | Data rate (Mb/s) | |
|---|---|---|---|---|---|---|---|---|---|
| | | | | | | | | 800 ns GI | 400 ns GI |
| 8 | BPSK | 1/2 | 1 | 108 | 6 | 216 | 108 | 27.0 | 30.0 |
| 9 | QPSK | 1/2 | 2 | 108 | 6 | 432 | 216 | 54.0 | 60.0 |
| 10 | QPSK | 3/4 | 2 | 108 | 6 | 432 | 324 | 81.0 | 90.0 |
| 11 | 16-QAM | 1/2 | 4 | 108 | 6 | 864 | 432 | 108.0 | 120.0 |
| 12 | 16-QAM | 3/4 | 4 | 108 | 6 | 864 | 648 | 162.0 | 180.0 |
| 13 | 64-QAM | 2/3 | 6 | 108 | 6 | 1296 | 864 | 216.0 | 240.0 |
| 14 | 64-QAM | 3/4 | 6 | 108 | 6 | 1296 | 972 | 243.0 | 270.0 |
| 15 | 64-QAM | 5/6 | 6 | 108 | 6 | 1296 | 1080 | 270.0 | 300.0 |

Références :

[1] Daji Qiao, Sunghyun Choi, Amit Jain, and Kan G. Shin, "MiSer: An Optimal Low-Energy Transmission Strategy for IEEE 802.11a/h," MobiCom'03, pp. 161-175, Septembre 2003.

[2] IEEE Computer Society, "Wireless LAN Medium Access Control (MAC) and Physical Layer (PHY) Specifications," IEEE Std 802.11™-2012, 2012

[3] Chapitre 16, Section 5, pp. 1068-1077, John G. Proakis and Masoud Salehi, Digital. Communications, 5th ed., McGraw-Hill International. Editions, 2008.

[4] V. Erceg et al., "TGn Channel Models," IEEE P802.11 Wireless LANs, 2007.

**Revendications**

**1.** Procédé (1) d'adaptation de lien utilisant un critère de sélection pour sélectionner un mode de transmission de trames PPDU à transmettre sur un canal d'un système de télécommunication comprenant un point d'accès et au moins une station comprenant différents modes de transmission auxquels sont associés des débits instantanés différents, l'accès au canal étant de type aléatoire, **caractérisé en ce que** la sélection utilise une métrique γ d'occupation temporelle du canal qui s'exprime sous la forme suivante : $\gamma = 10 \cdot \log_{10}\left(\frac{t_{acc}}{t_{tra_m}}\right)$ avec $t_{acc}$ le temps d'accès moyen au canal sur la fenêtre d'observation, $t_{tra_m}$ le temps nécessaire à la transmission d'une trame PPDU en utilisant le mode de transmission m qui s'exprime sous la forme : $t_{tra_m} = t_{header} + \frac{Data}{Datarate(m)}$ avec Data la charge en octets du PSDU à transmettre dans la trame PPDU, *Datarate* le débit instantané correspondant au mode m de transmission utilisé.

**2.** Procédé (1) d'adaptation de lien selon la revendication 1 dans lequel la détermination du temps d'accès moyen au canal $t_{acc}$ est effectuée à partir d'un débit moyen de transmission.

**3.** Procédé (1) d'adaptation de lien selon la revendication 2 dans lequel le débit moyen est exprimé en fonction de la probabilité de transmettre avec succès les trames PPDU associées à un service n, cette probabilité de succès $P_S(G)$ étant estimée par la relation: $P_S(G) = \frac{1}{1+G}$ avec $G$ le taux d'occupation du lien.

**4.** Procédé (1) d'adaptation de lien selon la revendication 1 comprenant :

- une comparaison à une valeur seuil des valeurs de la métrique $\gamma$ déterminée pour différents modes de transmission pour pré sélectionner des modes,
- une sélection selon un critère déterminé d'un mode parmi les différents modes pré sélectionnés.

**5.** Procédé (1) d'adaptation de lien selon la revendication 1 dans lequel la mesure de l'occupation temporelle du canal est faite sur une fenêtre d'observation ($T_{OBS}$) déterminée et utilise une modélisation par une loi de Poisson du taux d'arrivée des trames PPDU à transmettre, la variance $\lambda$ de la loi de Poisson correspondant à la fréquence moyenne d'arrivée des trames PPDU.

**6.** Procédé (1) d'adaptation de lien selon la revendication 1 dans lequel les différents modes de transmission sont classés par groupe de débits D équivalents et pour un groupe, le procédé comprend :

- une étape de détermination pour un mode de transmission donné de la valeur d'une première métrique $\alpha$ qui mesure une dégradation relative du signal de communication à une distance donnée d introduite par le support de transmission pour un environnement donné par rapport à un modèle de référence du support de transmission, résultat d'un effet multi trajets (MCM) et/ou d'un effet d'atténuation du support de transmission (PLM),
- une étape de comparaison des valeurs de la première métrique $\alpha$ pour différents modes pour sélectionner au moins un mode de transmission (Mode$_i$) par groupe.

**7.** Point d'accès (AP) WiFi comprenant M modes de transmission auxquels sont associés respectivement des débits instantanés différents, M$\geq$2, destiné à un système de télécommunication comprenant plusieurs stations et le point d'accès, l'accès au canal de transmission du système de télécommunication WiFi étant de type aléatoire, **caractérisé en ce qu'**il comprend :

- un module de détermination pour un mode de transmission donné de la valeur d'une première métrique $\gamma$ d'occupation temporelle du canal qui s'exprime sous la forme suivante : $\gamma = 10 \cdot \log_{10}\left(\frac{t_{acc}}{t_{tra_m}}\right)$ avec $t_{acc}$ le temps d'accès moyen au canal sur la fenêtre d'observation, $t_{tra_m}$ le temps nécessaire à la transmission d'une trame PPDU en utilisant le mode de transmission m qui s'exprime sous la forme : $t_{tra_m} = t_{header} + \frac{Data}{Datarate(m)}$ avec Data la charge en octets du PSDU à transmettre dans la trame PPDU, *Datarate* le débit instantané correspondant au mode m de transmission utilisé,
- un module de comparaison des valeurs de la métrique $\gamma$ pour différents modes à une valeur seuil pour pré sélectionner des modes de transmission,
- un module d'adaptation de lien pour effectuer la sélection selon un critère déterminé parmi les différents modes pré sélectionnés.

**8.** Système de télécommunication comprenant un point d'accès WiFi selon la revendication précédente.

**9.** Programme d'ordinateur sur un support d'informations, ledit programme comportant des instructions de programme adaptées à la mise en oeuvre d'un procédé d'adaptation de lien selon l'une quelconque des revendications 1 à 6, lorsque ledit programme est chargé et exécuté dans un point d'accès WiFi destiné à mettre en oeuvre un procédé d'adaptation de lien.

**10.** Support d'informations comportant des instructions de programme adaptées à la mise en oeuvre d'un procédé d'adaptation de lien selon l'une quelconque des revendications 1 à 6, lorsque ledit programme est chargé et exécuté dans un point d'accès WiFi destiné à mettre en oeuvre un procédé d'adaptation de lien.

**Patentansprüche**

1. Verfahren (1) zum Anpassen eines Links, das ein Auswahlkriterium verwendet, um einen Modus zum Senden von Rahmen PPDU auszuwählen, die auf einem Kanal eines Telekommunikationssystems gesendet werden sollen, das einen Zugriffspunkt und wenigstens eine Station umfasst, die verschiedene Sendemodi aufweist, denen unterschiedliche momentane Durchsätze zugeordnet sind, wobei der Zugriff auf den Kanal vom Zufallstyp ist, **dadurch gekennzeichnet, dass** die Auswahl eine Metrik $\gamma$ der zeitlichen Belegung des Kanals verwendet, die in der folgenden Form gegeben ist: $\gamma = 10 \cdot \log_{10}(t_{acc}/t_{tram})$, wobei $t_{acc}$ die mittlere Zugriffszeit auf den Kanal in dem Beobachtungsfenster ist, $t_{tram}$ die Zeit ist, die zum Senden eines Rahmens PPDU unter Verwendung des Sendemodus $m$ erforderlich ist und in der folgenden Form gegeben ist: $t_{tram} = t_{header} + Data/Datarate(m)$, wobei $Data$ die Last in Bytes des in dem Rahmen PPDU zu sendenden PSDU ist und wobei $Datarate$ der momentane Durchsatz ist, der dem verwendeten Sendemodus entspricht.

2. Verfahren (1) zum Anpassen eines Links nach Anspruch 1, wobei das Bestimmen der mittleren Zugriffszeit $t_{acc}$ auf den Kanal anhand eines mittleren Sendedurchsatzes erfolgt.

3. Verfahren (1) zum Anpassen eines Links nach Anspruch 2, wobei der mittlere Durchsatz als Funktion der Wahrscheinlichkeit, dass die Rahmen PPDU, die einem Dienst n zugeordnet sind, erfolgreich gesendet werden, gegeben ist, wobei diese Erfolgswahrscheinlichkeit $P_S(G)$ durch die folgende Beziehung geschätzt wird: $P_S(G) = 1/(1+G)$, wobei $G$ der Belegungsgrad des Links ist.

4. Verfahren (1) zum Anpassen eines Links nach Anspruch 1, das Folgendes umfasst:

   - Vergleichen eines Schwellenwertes von Werten der bestimmten Metrik $\gamma$ für verschiedene Sendemodi, um Modi im Voraus auszuwählen,
   - Auswählen gemäß einem bestimmten Kriterium eines Modus unter den verschiedenen im Voraus ausgewählten Modi.

5. Verfahren (1) zum Anpassen eines Links nach Anspruch 1, wobei das Messen der zeitlichen Belegung des Kanals in einem bestimmten Beobachtungsfenster ($T_{OBS}$) erfolgt und eine Modellierung durch ein Poisson-Gesetz des Ankunftsanteils von zu sendenden Rahmen PPDU verwendet, wobei die Varianz $\lambda$ des Poisson-Gesetzes der mittleren Ankunftshäufigkeit der Rahmen PPDU entspricht.

6. Verfahren (1) zum Anpassen eines Links nach Anspruch 1, wobei die verschiedenen Sendemodi pro Gruppe äquivalenter Durchsätze D klassifiziert sind und wobei das Verfahren für eine Gruppe Folgendes umfasst:

   - einen Schritt des Bestimmens für einen gegebenen Sendemodus des Wertes einer ersten Metrik $\alpha$, die eine relative Verschlechterung des Kommunikationssignals in einem gegebenen Abstand d misst, die durch den Sendeträger für eine gegebene Umgebung in Bezug auf ein Referenzmodell des Sendeträgers als Ergebnis einer Mehrfachbahnwirkung (MCM) und/oder einer Dämpfungswirkung des Sendeträgers (PLM) eingeführt wird,
   - einen Schritt des Vergleichens der Werte der ersten Metrik $\alpha$ für verschiedene Modi, um wenigstens einen Sendemodus (Mode;) pro Gruppe auszuwählen.

7. WiFi-Zugriffspunkt (WiFi-AP), der M Sendmodi enthält, denen jeweilige unterschiedliche momentane Durchsätze zugeordnet sind, wobei M $\geq$ 2, der für ein Telekommunikationssystem bestimmt ist, das mehrere Stationen und den Zugriffspunkt enthält, wobei der Zugriff auf den Sendekanal des WiFi-Telekommunikationssystems vom Zufallstyp ist, **dadurch gekennzeichnet, dass** er Folgendes umfasst:

   - ein Modul zum Bestimmen für einen gegebenen Sendemodus des Wertes einer ersten Metrik $\gamma$ der zeitlichen Belegung des Kanals, die in der folgenden Form gegeben ist: $\gamma = 10 \cdot \log_{10}(t_{acc}/t_{tram})$, wobei $t_{acc}$ die mittlere Zugriffszeit auf den Kanal in dem Beobachtungsfenster ist, $t_{tram}$ die Zeit ist, die zum Senden eines Rahmens PPDU unter Verwendung des Sendmodus $m$ erforderlich ist und die in der folgenden Form gegeben ist: $t_{tram} = t_{header} + Data/Datarate(m)$, wobei $Data$ die Last in Bytes des in dem Rahmen PPDU zu sendenden PSDU ist und $Datarate$ der momentane Durchsatz ist, der dem verwendeten Sendemodus entspricht,
   - ein Modul zum Vergleichen von Werten der Metrik $\gamma$ für verschiedene Modi mit einem Schwellenwert, um Sendemodi im Voraus auszuwählen,
   - ein Modul zum Anpassen eines Links, um die Auswahl gemäß einem bestimmten Kriterium unter den verschiedenen im Voraus ausgewählten Modi vorzunehmen.

8. Telekommunikationssystem, das einen WiFi-Zugriffspunkt nach dem vorhergehenden Anspruch umfasst.

9. Computerprogramm auf einem Datenträger, wobei das Programm Programmbefehle enthält, die dafür ausgelegt sind, das Verfahren zum Anpassen eines Links nach einem der Ansprüche 1 bis 6 auszuführen, wenn das Programm in ein WiFi-Zugriffspunkt, der dazu bestimmt ist, ein Verfahren zum Anpassen eines Links auszuführen, geladen und darin ausgeführt wird.

10. Datenträger, der Programmbefehle enthält, die für die Ausführung eines Verfahrens zum Anpassen eines Links nach einem der Ansprüche 1 bis 6 ausgelegt sind, wenn das Programm in ein WiFi-Zugriffspunkt, der dazu bestimmt ist, ein Verfahren zum Anpassen eines Links auszuführen, geladen und darin ausgeführt wird.

**Claims**

1. Link adaptation method (1) using a selection criterion to select a mode of transmission of PPDU frames to be transmitted over a channel of a telecommunications system comprising an access point and at least one station comprising various transmission modes with which are associated different instantaneous data rates, access to the channel being of random type, **characterised in that** the selection uses a metric $\gamma$ of time utilisation of the channel, which is expressed in the following form:

$$\gamma = 10 \cdot \log_{10}\left(\frac{t_{acc}}{t_{tra_m}}\right)$$

where $t_{acc}$ is the average time taken to access the channel in the observation window, and $t_{tra_m}$ is the time required to transmit a PPDU frame using the transmission mode m, which is expressed in the form:

$$t_{tra_m} = t_{header} + \frac{Data}{Datarate(m)}$$

where *Data* is the payload in bytes of the PSDU to be transmitted in the PPDU frame and *Datarate* the instantaneous data rate corresponding to the transmission mode m used.

2. Link adaptation method (1) according to Claim 1, wherein the average time taken to access the channel $t_{acc}$ is determined on the basis of an average transmission data rate.

3. Link adaptation method (1) according to Claim 2, wherein the average data rate is expressed as a function of the probability of transmitting with success the PPDU frames associated with a service n, this probability of success $P_S(G)$ being estimated by the relationship:

$$P_S(G) = \frac{1}{1+G}$$

where *G* is the utilisation rate of the link.

4. Link adaptation method (1) according to Claim 1, comprising:

   - comparing to a threshold value values of the metric $\gamma$ determined for various transmission modes, for the purpose of mode preselection;
   - selecting according to a set criterion one mode from the various preselected modes.

5. Link adaptation method (1) according to Claim 1, wherein the measurement of the time utilisation of the channel is taken in a set observation window ($T_{OBS}$) and uses a model based on a Poisson distribution of the rate of arrival of the PPDU frames to be transmitted, the variance λ of the Poisson distribution corresponding to the average frequency of arrival of the PPDU frames.

**6.** Link adaptation method (1) according to Claim 1, wherein the various transmission modes are classed by group of equivalent data rates D and for a group, the method comprises:

- a step of determining for a given transmission mode the value of a first metric α that measures a relative degradation of the communication signal at a given distance d caused by the transmission medium for a given environment, relative to a reference model of the transmission medium, and due to a multipath effect (MCM) and/or an effect of attenuation of the transmission medium (PLM);
- a step of comparing values of the first metric α for various modes, for the purposes of selecting at least one transmission mode (*Mode$_i$*) per group.

**7.** Wi-Fi access point (AP) comprising M, M≥2, transmission modes with which are respectively associated different instantaneous data rates, said access point being intended for a telecommunications system comprising a plurality of stations and the access point, access to the transmission channel of the Wi-Fi telecommunications system being of random type, **characterised in that** it comprises:

- a module for determining, for a given transmission mode, the value of a first metric $\gamma$ of time utilisation of the channel, which is expressed in the following form:

$$\gamma = 10 \cdot \log_{10}\left(\frac{t_{acc}}{t_{tra_m}}\right)$$

where $t_{acc}$ is the average time taken to access the channel in the observation window, and $t_{tra_m}$ is the time required to transmit a PPDU frame using the transmission mode m, which is expressed in the form:

$$t_{tra_m} = t_{header} + \frac{Data}{Datarate\,(m)}$$

where *Data* is the payload in bytes of the PSDU to be transmitted in the PPDU frame and *Datarate* the instantaneous data rate corresponding to the transmission mode m used;
- a module for comparing values of the metric $\gamma$ for various modes to a threshold value, for the purposes of transmission modes preselection;
- a link adaptation module for selecting according to a set criterion from the various preselected modes.

**8.** Telecommunications system comprising a Wi-Fi access point according to the preceding claim.

**9.** Computer program on a data medium, said program including program instructions suitable for implementing a link adaptation method according to any one of Claims 1 to 6, when said program is loaded and executed in aWi-Fi access point intended to implement a link adaptation method.

**10.** Data medium including program instructions suitable for implementing a link adaptation method according to any one of Claims 1 to 6, when said program is loaded and executed in a Wi-Fi access point intended to implement a link adaptation method.

Service Data Unit (SDU)

| Header | Payload | Tail |

Protocol Data Unit (PDU)

Fig.1

Fig.2

Fig.3

Fig.8

EP 3 014 920 B1

Fig.4

Entête   Données

L_LENGTH
L_DATARATE

ou

LENGTH
MCS
CH_BANDWIDTH
GI_TYPE

$t_{OBS}$

$\frac{t_{OBS}}{N}$

$\lambda = \frac{N}{T_{OBS}}$

$\bar{X} = \frac{\sum_{n=1}^{N} X_n}{N}$

$X_n$

$X_n$

$\lambda, \bar{X}$

$t_{SIFS} = \left(\frac{1}{\lambda} - \bar{X}\right)$

$X_n = L\_LENGTH \cdot 8 \cdot L\_DATARATE + t_{header}$

ou

$X_n = D(m) \cdot 8 \cdot LENGTH + t_{header}$

$X_1$

$X_n$

$X_N$

100  RAM

101  µP

102

AP

Fig.10

22

Fig.5

Fig.9

Fig.6

Fig.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009078524 A

- WO 2011083238 A

**Littérature non-brevet citée dans la description**

- **DAJI QIAO ; SUNGHYUN CHOI ; AMIT JAIN ; KAN G. SHIN.** MiSer: An Optimal Low-Energy Transmission Strategy for IEEE 802.11a/h. *MobiCom',* Septembre 2003, vol. 03, 161-175
- Wireless LAN Medium Access Control (MAC) and Physical Layer (PHY) Specifications. IEEE Computer Society. IEEE Std 802.11™-2012, 2012

- **JOHN G.** Proakis and Masoud Salehi, Digital. Communications. McGraw-Hill International, 2008, vol. 5, 1068-1077
- **V. ERCEG et al.** TGn Channel Models. *IEEE P802.11 Wireless LANs,* 2007